(19) Europäisches Patentamt / European Patent Office / Office européen des brevets

(11) **EP 4 001 851 A1**

(12) **DEMANDE DE BREVET EUROPEEN**

(43) Date de publication:
**25.05.2022 Bulletin 2022/21**

(21) Numéro de dépôt: **21208492.5**

(22) Date de dépôt: **16.11.2021**

(51) Classification Internationale des Brevets (IPC):
**G01C 25/00** $^{(2006.01)}$

(52) Classification Coopérative des Brevets (CPC):
**G01C 25/005**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **17.11.2020 FR 2011746**

(71) Demandeur: **Commissariat à l'Energie Atomique et aux Energies Alternatives
75015 Paris (FR)**

(72) Inventeurs:
• **BONNET, Stéphane**
  **38054 Grenoble Cedex 09 (FR)**
• **SAGUIN, Nathalie**
  **38054 Grenoble Cedex 09 (FR)**

(74) Mandataire: **Marks & Clerk France
Immeuble "Visium"
22, avenue Aristide Briand
94117 Arcueil Cedex (FR)**

(54) **PROCEDE D'ALIGNEMENT D'UNE PLURALITE DE CAPTEURS INERTIELS ET/OU MAGNETIQUES ET DISPOSITIF PERMETTANT LA MISE EN OEUVRE D'UN TEL PROCEDE**

(57) Procédé d'alignement d'une pluralité de capteurs inertiels et/ou magnétiques disposés sur un même support, comprenant les étapes suivantes :
- une étape (Al, A2) d'application de K rotations au support, autour d'au moins deux axes de rotation $m_k$ de directions non nécessairement orthogonales entre elles ;
- une étape (B1, B2) d'acquisition d'une série $V_i$ de N mesures physiques obtenues pour chaque i-ième capteur ($C_i$) et pour chaque k-ième rotation élémentaire, chaque mesure physique étant acquise pour une n-ième position angulaire autour du k-ième axe de rotation et étant exprimée dans un repère orthogonal (Sci) du i-ième capteur ;
- une étape (C1, C2) d'estimation des coordonnées du vecteur $m_{ki}$ de chaque axe de rotation $m_k$ dans le repère de chaque i-ième capteur, à partir des N mesures physiques acquises, ledit axe de rotation correspondant à l'axe pour lequel l'écart type ou la variance des valeurs desdites mesures physiques projetées sur ledit axe présente un optimum ;
- une étape (D1) de détermination de la rotation entre le repère d'un i-ième capteur (Ci) et le repère d'un j-ième capteur (Cj) à partir des coordonnées des vecteurs $m_{ki}$, $m_{kj}$ correspondant aux axes de rotation $m_k$ dans chacun des repères desdits capteurs, en utilisant une technique d'estimation d'attitude comprenant la minimisation (D10) d'une fonction de coût.

[Fig 2]

A1 → Rotation du support selon l'axe $m_1$
A2 → Rotation du support selon l'axe $m_2$
B1 → Acquisition de N mesures $V_i$ pour chaque capteur $C_i$ pendant la rotation $m_1$
B2 → Acquisition de N mesures $V_i$ pour chaque capteur $C_i$ pendant la rotation $m_2$
C1 → Détermination coordonnées vecteur $m_{1i}$ dans le repère $S_{Ci}$ de chaque capteur $C_i$
C2 → Détermination coordonnées vecteur $m_{2i}$ dans le repère $S_{Ci}$ de chaque capteur $C_i$
D1 → Détermination de la matrice de rotation $R_{ij}$ entre deux capteurs $C_i$ et $C_j$ à partir des coordonnées des vecteurs $m_{1i}$, $m_{1j}$, $m_{2i}$, $m_{2j}$
D10 → Minimisation de la fonction de coût $\phi(R_{ij}) = \frac{1}{2} \sum_{k=1}^{K} \alpha_k \| m_{ki} - R_{ij} m_{kj} \|^2$

**Description**

**Domaine technique de l'invention**

L'invention se situe dans le domaine des capteurs inertiels (accéléromètre, gyromètre ...) et des capteurs magnétiques (magnétomètre ...). L'invention concerne plus spécifiquement un procédé d'alignement d'au moins deux capteurs inertiels et/ou magnétiques et un dispositif permettant la mise en œuvre un tel procédé.

Les domaines d'application sont variés et couvrent en particulier : le domaine biomédical, pour l'observation des personnes ; le domaine sportif, pour l'analyse d'un mouvement, d'un sportif lui-même ou de son équipement (raquettes, balles ...) ; le domaine de l'automobile, de l'aéronautique (drones, avions...) de la robotique, de la réalité virtuelle, des jeux vidéo, des tablettes, des Smartphones ...

**Etat de la technique**

Il existe de nombreux systèmes de mesure qui comprennent un ensemble de capteurs inertiels et/ou magnétiques.

On connaît en particulier des systèmes inertiels constitués d'un ou plusieurs capteurs choisis notamment parmi des accéléromètres, des magnétomètres ou des gyromètres, ayant un ou plusieurs axes de sensibilité. Ces systèmes inertiels présentent l'avantage d'être autonomes et de ne pas requérir d'équipement préalable de l'environnement dans lequel on observe le mouvement, l'orientation et/ou la position d'un objet.

On peut se référer par exemple à une centrale inertielle ou unité de mesure inertielle (IMU) qui utilise généralement une combinaison d'accéléromètres (3a), de gyromètres (3g) et de magnétomètres (3m). Une telle unité de mesure inertielle permet notamment d'estimer les mouvements (accélération, vitesse linéaire, vitesse angulaire), l'orientation (angles de roulis, de tangage et de cap) et/ou la position d'un objet. En pratique, les capteurs sont disposés sur l'objet observé.

Au cours des dernières décennies, de nombreuses applications ont été étudiées avec des unités de mesure inertielle, comme par exemple dans le domaine de la santé : l'analyse de la posture d'une personne dans sa vie quotidienne, l'analyse de la marche d'une personne, l'analyse de crises d'épilepsie au sens du mouvement ...

D'autres systèmes de mesure peuvent combiner uniquement des accéléromètres, uniquement des magnétomètres, ou uniquement des gyromètres, en encore une combinaison de capteurs d'au moins deux types différents.

De tels systèmes de mesure peuvent permettre de former un gradiomètre qui est un système mesurant le gradient, généralement dans l'espace, d'une grandeur physique tel que le champ gravitationnel ou le champ magnétique. Dans un gradiomètre, au moins deux capteurs sont étroitement positionnés entre eux et la dérivée spatiale est calculée numériquement à partir des mesures des capteurs.

Dans le cas d'un gradiomètre, et plus généralement dans les systèmes de mesure comprenant un ensemble de capteurs inertiels et/ou magnétiques, chaque capteur doit être correctement calibré seul puis les mesures physiques des différents capteurs calibrés doivent être déterminées dans un système de coordonnées (ou « repère ») commun. Ces deux opérations sont respectivement appelées « calibration » (ou « étalonnage ») du capteur et « alignement » du capteur. L'étape de calibration vise à déterminer des grandeurs physiques à partir des signaux électriques récupérés/mesurés. L'étape de calibration permet ainsi de délivrer des grandeurs physiques, et ce, dans un repère orthogonal défini pour chaque capteur. L'étape d'alignement consiste en l'estimation des rotations entre les repères des différents capteurs et un repère commun de référence. Le repère commun peut être le repère d'un des capteurs (choisi de manière arbitraire ou non) ou un repère extérieur, par exemple le support des capteurs.

La demande de brevet FR2915568 et la publication « Calibration methods for inertial and magnetic sensors » (Sensors and Actuators A: Physical, Volume 156, Issue 2, December 2009, pp 302-311) décrivent un procédé de calibration qui comprend un procédé de détection d'un axe de rotation sensiblement invariant d'un mouvement d'un mobile équipé d'au moins un capteur inertiel ou magnétique à trois axes de sensibilité, comprenant les étapes suivantes :

- acquisition d'au moins 3 échantillons de mesures physiques à des instants différents et selon les trois axes de sensibilité dudit capteur ;
- estimation d'un axe de rotation sensiblement invariant dans l'espace des mesures physiques, l'axe de rotation sensiblement invariant correspondant à l'axe pour lequel l'écart type des valeurs desdites mesures physiques projetées sur ledit axe est minimisé pour un magnétomètre ou un accéléromètre et maximisé pour un gyromètre : ladite étape d'estimation peut ainsi comprendre une étape de calcul par analyse en composantes principales ; et
- identification dudit axe estimé comme axe de rotation sensiblement invariant du mouvement.

Le procédé de calibration est adapté pour déterminer une matrice de rotation apte à transformer les coordonnées exprimées dans un repère d'un capteur en des coordonnées exprimées dans un repère solidaire d'un mobile portant le capteur, et il comprend les étapes suivantes :

- rotation du mobile selon au moins deux des trois axes orthogonaux du repère du mobile ;
- acquisition d'une série d'au moins 3 mesures physiques par capteur pour chaque rotation du mobile (au moins deux séries car il y a autant de séries que d'axes de rotation selon au moins deux des trois axes du repère du mobile) ;
- détermination, à partir des séries acquises, des coordonnées de chacun des axes de rotation dans le repère du capteur : lesdites coordonnées sont déterminées selon le procédé de détection d'un axe de rotation sensiblement invariant décrit ci-dessus ; puis
- élaboration d'une matrice de rotation à partir desdites coordonnées déterminées.

Le procédé décrit repose sur l'emploi de deux ou trois rotations élémentaires dans l'espace, selon deux ou trois axes orthogonaux entre eux, qui sont en pratique les axes du repère du boitier portant les capteurs, et apte à être disposé sur le mobile. Il est supposé que le boitier est de forme parallélépipédique. L'inconvénient est la restriction de la méthode à des rotations orthogonales entre elles. En outre, le procédé décrit se base sur un repère bien déterminé, et n'est pas adapté pour déterminer une matrice de rotation entre deux capteurs et/ou entre les capteurs et un repère qui n'est pas nécessairement celui du boîtier. En outre, le procédé est limité à trois axes de rotation élémentaires possibles.

D'autres solutions s'intéressent uniquement à des calibrations et/ou des alignements de capteurs de champ physique à magnitude constante, tels que les accéléromètres ou les magnétomètres, ce qui exclut les gyromètres.

L'invention vise à surmonter les inconvénients précités de l'art antérieur.

Plus précisément, l'invention vise à disposer d'un procédé d'alignement d'une pluralité de capteurs inertiels et/ou magnétiques, qui puisse s'adapter à toute configuration de capteurs, à tout type de capteurs inertiels et/ou magnétiques.

De préférence, il est recherché un procédé d'alignement qui permette de déterminer la rotation entre chaque repère de chaque capteur et un repère défini, qui peut être un repère d'un des capteurs.

**Exposé de l'invention**

Un premier objet de l'invention permettant de remédier à ces inconvénients est un procédé d'alignement d'une pluralité de capteurs inertiels et/ou magnétiques, lesdits capteurs étant disposés sur un même support, de préférence rigide, le procédé comprenant les étapes suivantes :

- **A** une étape d'application de K rotations élémentaires au support, autour d'au moins deux axes de rotation $m_k$ de directions distinctes non nécessairement orthogonales entre elles, K étant un nombre entier supérieur ou égal à 2 ;
- **B** une étape d'acquisition d'une série $V_i$ de N mesures physiques obtenues pour chaque i-ième capteur et pour chaque k-ième rotation élémentaire, chaque mesure physique $v_i(n)$ étant acquise pour une n-ième position angulaire autour du k-ième axe de rotation $m_k$ et étant exprimée dans un repère orthogonal du i-ième capteur, n variant entre 1 et N ;
- **C** une étape d'estimation des coordonnées du vecteur $m_{ki}$ de chaque axe de rotation $m_k$ dans le repère de chaque i-ième capteur, ladite estimation étant déduite des N mesures physiques $v_i(n)$ acquises pour chaque i-ième capteur et chaque k-ième rotation élémentaire, ledit axe de rotation correspondant à l'axe pour lequel l'écart type ou la variance des valeurs desdites mesures physiques projetées sur ledit axe présente un optimum, par exemple un minimum pour un magnétomètre ou un accéléromètre, ou un maximum pour un gyromètre ;

les étapes **A**, **B** et **C** permettant de déterminer, pour chaque k-ième rotation élémentaire, les coordonnées du vecteur $m_{ki}$ du même k-ième axe de rotation $m_k$ dans les repères des différents capteurs ;
ledit procédé comprenant en outre :

- **D** une étape de détermination de la rotation entre le repère d'un i-ième capteur et le repère d'un j-ième capteur, lesdits capteurs étant disposés sur le même support, chaque rotation étant obtenue à partir des coordonnées des vecteurs $m_{ki}$, $m_{kj}$ correspondant aux axes de rotation $m_k$ dans chacun des repères des i-ième et j-ième capteurs, et ladite étape de détermination utilisant une technique d'estimation d'attitude à partir des vecteurs déterminés, mettant notamment en œuvre la minimisation d'une fonction de coût.

La pluralité de capteurs inertiels et/ou magnétiques disposés sur un même support forme un système de mesure. Le support est dit « rigide » en ce qu'il est conçu pour éviter toute déformation du repère d'un capteur par rapport à un autre.

Le procédé d'alignement selon l'invention met en œuvre au moins deux rotations selon au moins deux axes qui ne sont pas nécessairement orthogonaux, et qui ne sont d'ailleurs généralement pas orthogonaux, par exemple trois rotations selon trois axes non orthogonaux. Avantageusement, le procédé d'alignement peut mettre en œuvre plus de trois rotations selon plus de trois axes de rotation différents et non nécessairement orthogonaux. Cela permet d'avoir des résultats de rotations et un alignement déterminés de manière plus efficiente.

Le procédé d'alignement selon l'invention suppose que chaque capteur a déjà fait l'objet d'une calibration physique de sorte que chaque capteur délivre une information vectorielle dans un repère orthogonal qui lui est propre.

Cette étape de calibration physique ne fait pas partie de l'invention, mais l'invention peut utiliser avantageusement tout ou partie des données de mesure de capteurs qui ont été utilisées pour mener l'étape de calibration physique.

Si on considère deux repères $S_{C1}$ et $S_{C2}$ associés respectivement à deux capteurs $C_1$ et $C_2$, l'invention permet d'estimer la matrice de rotation entre les deux repères $S_{C1}$ et $S_{C2}$, et peut ensuite permettre d'aligner les mesures du capteur $C_2$ dans le repère du capteur $C_I$.

Le principe de l'invention consiste à réaliser plusieurs rotations élémentaires du support dans l'espace, selon des axes de rotation qui ne sont pas nécessairement orthogonaux. Pour chaque rotation élémentaire, on acquiert une série de N mesures physiques issues de chaque capteur. N est supérieur ou égal à 3. Pour chaque rotation élémentaire dans l'espace, on détermine l'axe de rotation dans le repère $S_{C1}$ et le même axe de rotation dans le repère $S_{C2}$, et ce, en utilisant les mesures physiques acquises pour chacun des capteurs au cours de cette rotation élémentaire. Cela permet de disposer de la même observation vectorielle dans les repères $S_{C1}$ et $S_{C2}$. On réitère les mêmes opérations pour d'autres rotations élémentaires, dont les axes de rotation ne sont généralement pas orthogonaux entre eux. En réalisant ainsi plusieurs rotations élémentaires dans l'espace, on obtient ainsi plusieurs observations vectorielles dans les repères $S_{C1}$ et $S_{C2}$ des deux capteurs. A partir de ces observations vectorielles, on peut utiliser un algorithme de détermination d'attitude pour déterminer la matrice de rotation entre les deux repères. Ces opérations peuvent évidemment être réalisées pour plus de deux capteurs.

Les capteurs inertiels et/ou magnétiques considérés sont à trois axes de sensibilité.

Avantageusement, les mesures physiques comprennent N échantillons à des instants différents des mesures physiques selon les trois axes de sensibilité de chaque capteur, N étant supérieur ou égal 3.

Le procédé selon l'invention est polyvalent et est applicable à différents capteurs inertiels (accéléromètre, gyromètre ...) et magnétiques mètre ...) et à toute combinaison de ces capteurs. Le procédé ne nécessite pas d'équipement coûteux, puisqu'il repose sur des rotations élémentaires du support. Ces rotations n'ont pas besoin d'être orthogonales les unes par rapport aux autres.

En outre, dans le cas de l'accéléromètre, le procédé selon l'invention n'est pas perturbé par l'accélération centrifuge due à la rotation élémentaire. L'accéléromètre mesure sur chacun de ses axes de sensibilité la projection du champ d'accélération de la pesanteur sommé à l'accélération centrifuge. Faire tourner le support selon un axe de rotation revient à réaliser une rotation dans un plan perpendiculaire audit axe de rotation et l'accélération centrifuge due à la rotation a une composante nulle selon l'axe de rotation. De ce fait, l'alignement peut être réalisé en dynamique (lorsque l'accélération centrifuge est suffisamment significative pour ne plus être négligée) et pas seulement en statique (lorsque l'accélération centrifuge est suffisamment faible pour être négligée).

Comme expliqué précédemment, un autre avantage de l'invention est que les mêmes mesures physiques (ou au moins une partie des mesures) peuvent être utilisées à la fois pour la calibration et pour l'alignement des capteurs, et qu'on peut utiliser le même dispositif pour réaliser la calibration et l'alignement.

Le procédé d'alignement selon l'invention peut en outre comporter l'une ou plusieurs des caractéristiques suivantes prises isolément ou suivant toutes combinaisons techniques possibles.

Selon un mode de réalisation avantageux, l'étape **D** de détermination comprend une étape préalable de pondération de chaque k-ième rotation élémentaire par une constante de pondération $\alpha_k$, exprimant la contribution de l'erreur quadratique de la k-ième rotation à la fonction de coût, où $\alpha_k$ est strictement supérieure à 0 et inférieure à 1 et la somme des constantes de pondération $\alpha_k$ est égale à 1. Les constantes de pondération permettent avantageusement de tenir compte des différents niveaux de bruit à travers les observations des vecteurs de rotation.

Selon un premier mode de réalisation, l'étape **D** de détermination comprend une étape **D1** de détermination d'au moins une matrice de rotation $R_{ij}$ permettant d'exprimer les mesures d'un j-ième capteur dans le repère d'un i-ième capteur à partir des coordonnées des vecteurs $m_{ki}$, $m_{kj}$ des axes de rotation $m_k$ dans chacun des repères des i-ième et j-ième capteurs.

En particulier, l'étape **D1** de détermination de la matrice de rotation $R_{ij}$ peut comprendre au moins une étape **D10** de minimisation de la fonction de coût :

$$\phi\left(R_{ij}\right) = \frac{1}{2}\sum_{k=1}^{K} \alpha_k \left\| m_{ki} - R_{ij} m_{kj} \right\|^2$$

où K est le nombre de rotations élémentaires, $m_{ki}$ est le vecteur du k-ième axe de rotation $m_k$ dans le repère du i-ième capteur, $m_{kj}$ est le vecteur du k-ième axe de rotation $m_k$ dans le repère du j-ième capteur et $\alpha_k$ est une constante de pondération définie pour chaque k-ième rotation élémentaire, où $\alpha_k$ est strictement supérieure à 0 et inférieure à 1 et la somme des constantes de pondération $\alpha_k$ est égale à 1.

Encore plus particulièrement, l'étape **D10** de minimisation de la fonction de coût $\phi(\boldsymbol{R}_{ij})$ met en œuvre la décomposition en valeurs singulières de la matrice :

$$C = \sum_{k=1}^{K} \alpha_k \boldsymbol{m}_{ki} \boldsymbol{m}_{kj}^{T}$$

Selon un deuxième mode de réalisation, l'étape **D** de détermination comprend une étape **D2** de détermination d'au moins un quaternion unitaire **q** à partir des coordonnées des vecteurs $\mathbf{m}_{ki}$, $\mathbf{m}_{kj}$ des axes de rotation $m_k$ dans chacun des repères des deux capteurs.

En particulier, l'étape **D2** de détermination du quaternion unitaire **q** peut comprendre au moins une étape **D20** de minimisation de la fonction de coût :

$$\phi(\boldsymbol{q}) = \frac{1}{2} \sum_{k=1}^{K} \alpha_k \left\| (\boldsymbol{m}_{ki})_q - \bar{q} \otimes (\boldsymbol{m}_{kj})_q \otimes q \right\|^2$$

$$= \frac{1}{2} \sum_{k=1}^{K} \alpha_k \left\| q \otimes (\boldsymbol{m}_{ki})_q - (\boldsymbol{m}_{kj})_q \otimes q \right\|^2$$

où K est le nombre de rotations élémentaires, $(\mathbf{m}_{ki})_q$ est le quaternion créé à partir du vecteur du k-ième axe de rotation $m_k$ dans le repère du i-ième capteur, $(\mathbf{m}_{kj})_q$ est quaternion créé à partir du vecteur du k-ième axe de rotation $m_k$ dans le repère du j-ième capteur et $\alpha_k$ est une constante de pondération définie pour chaque k-ième rotation élémentaire, où $\alpha_k$ est strictement supérieure à 0 et inférieure à 1 et la somme des constantes de pondération $\alpha_k$ est égale à 1.

Selon un mode de réalisation applicable à l'un ou l'autre des deux modes de réalisation et plus largement à un procédé selon l'invention, au moins deux rotations élémentaires sont appliquées selon au moins deux axes de rotation $m_k$ de directions non orthogonales entre elles.

De préférence, le procédé d'alignement comprend en outre :

- **E** une étape d'alignement des mesures d'un capteur dans un repère de référence correspondant au repère d'un capteur choisi parmi les capteurs disposés sur le support, ladite étape d'alignement étant réalisée à partir de la rotation déterminée à l'étape **D.**

Selon un mode de réalisation, l'étape d'estimation **C** comprend une étape de calcul par analyse en composantes principales (ACP) des N mesures physiques acquises, l'une parmi la première ou la troisième composante principale correspondant aux coordonnées dudit axe de rotation, par exemple la troisième composante principale pour un magnétomètre ou un accéléromètre ou la première composante principale pour un gyromètre.

Selon un mode de réalisation alternatif au mode de réalisation précédent, l'étape d'estimation **C** comprend une étape de calcul des moindres carrés appliquée à une combinaison linéaire des N mesures physiques acquises.

Les capteurs peuvent être choisis parmi des accéléromètres, des gyromètres, des magnétomètres ou une combinaison d'au moins deux de ces capteurs.

Un deuxième objet de l'invention est un dispositif d'alignement d'une pluralité de capteurs inertiels et/ou magnétiques, lesdits capteurs étant disposés sur un même support de préférence rigide, ledit dispositif comprenant :

- un moyen de rotation adapté pour appliquer des rotations élémentaires au support, selon des axes de rotation de directions distinctes et non nécessairement orthogonales entre elles (étape **A**);
- une unité de traitement apte à implémenter les étapes **B, C, D,** et éventuellement **E** du procédé d'alignement selon le premier objet de l'invention.

Le procédé d'alignement et le dispositif d'alignement selon l'invention peuvent comporter l'une quelconque des caractéristiques précédemment énoncées, prises isolément ou selon toutes combinaisons techniquement possibles avec d'autres caractéristiques.

**Brève description des figures**

D'autres caractéristiques, détails et avantages de l'invention ressortiront à la lecture de la description faite en référence aux dessins annexés donnés à titre d'exemple et qui représentent, respectivement :

[Fig. 1] représente un système de mesure comprenant une pluralité de capteurs inertiels et/ou magnétiques sur un support commun ;
[Fig.2] illustre un premier mode de réalisation d'un procédé d'alignement selon l'invention ;
[Fig.3] illustre un deuxième mode de réalisation d'un procédé d'alignement selon l'invention ;
[Fig.4] représente un exemple de système de mesure comprenant une pluralité d'accéléromètres et de gyromètres disposés sur un support commun ;
[Fig.5] représente un exemple de dispositif d'alignement permettant de mettre en œuvre le procédé d'alignement selon l'invention.

Dans l'ensemble de ces figures, des références identiques peuvent désigner des éléments identiques ou analogues.
De plus, les différentes parties représentées sur les figures ne le sont pas nécessairement selon une échelle uniforme, pour rendre les figures plus lisibles.

**Description détaillée de l'invention**

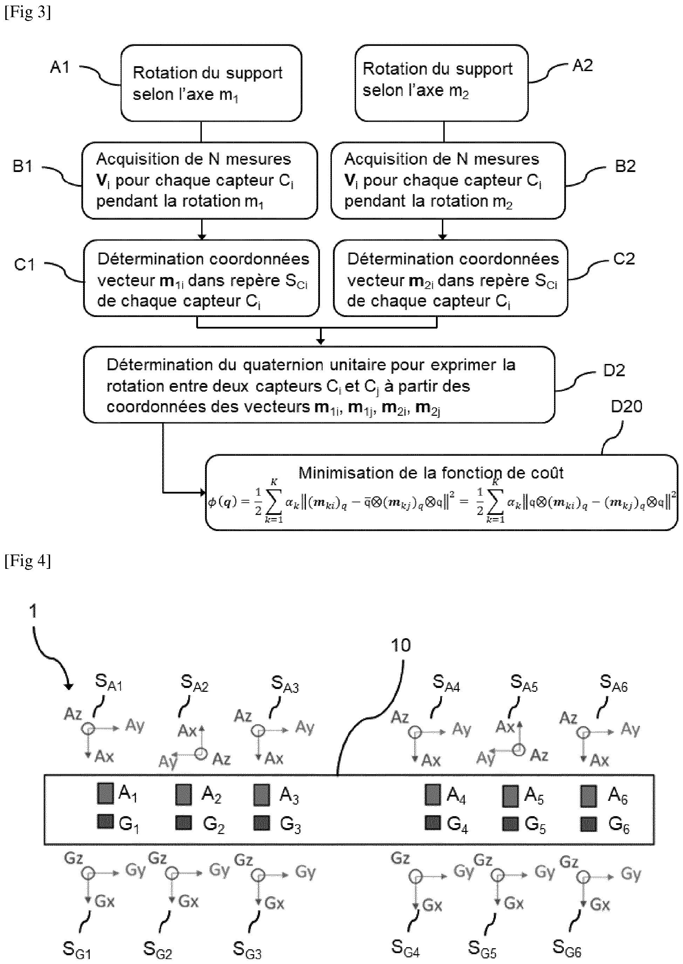

L'invention concerne un procédé d'alignement d'une pluralité de capteurs inertiels et/ou magnétiques, lesdits capteurs étant disposés sur un même support suffisamment rigide pour éviter toute déformation du repère d'un capteur par rapport à un autre.

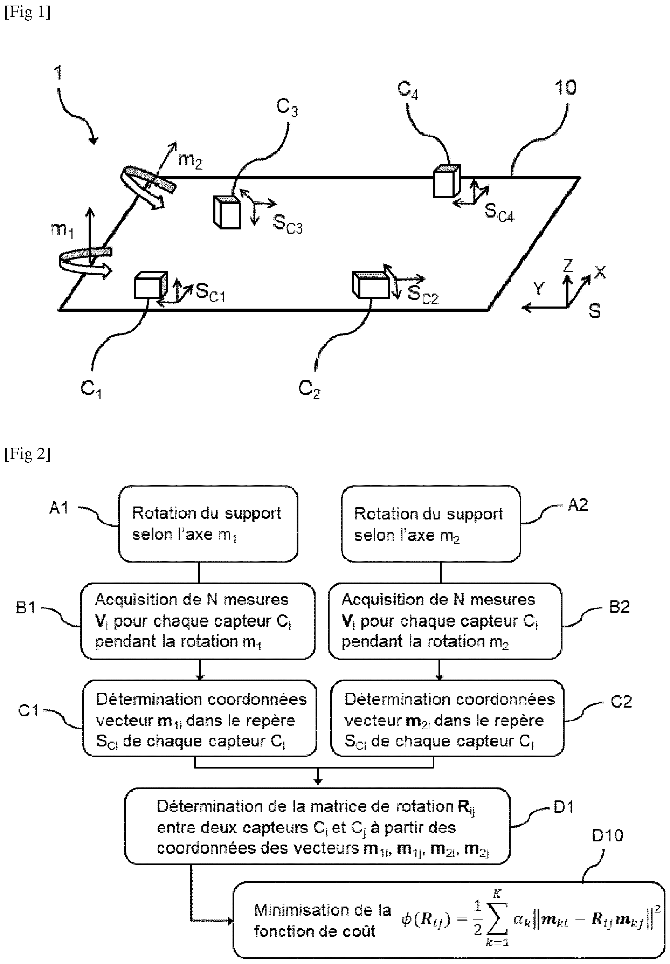

La figure 1 illustre un système de mesure 1 comprenant une pluralité de capteurs.
Quatre capteurs $C_1$, $C_2$, $C_3$, $C_4$ sont représentés disposés sur un support 10. Chaque capteur a son propre repère orthogonal $S_{C1}$, $S_{C2}$, $S_{C3}$, $S_{C4}$. Le support 10 a un repère orthogonal S qui lui est propre. Le support est représenté sous une forme simple et plate, ce qui n'est pas limitatif. Le support peut être parallélépipède, cylindrique ou sous une forme incurvée autre que cylindrique. Le support doit être cependant suffisamment rigide pour que les repères des capteurs ne se déforment pas les uns par rapport aux autres. En outre, on a représenté quatre capteurs mais ce nombre n'est en rien limitatif.
On recherche l'alignement des capteurs, c'est-à-dire l'estimation des rotations entre les repères des différents capteurs et un repère commun de référence, qui peut être le repère d'un des capteurs, le repère du support ou un repère extérieur. Dans la suite de la description, on recherche la rotation entre les capteurs et un capteur de référence qui peut être par convention le capteur $C_1$ (ou un des capteurs $A_1$ ou $G_1$ comme décrit plus après). Il est ensuite aisé de reporter les rotations par rapport à un autre repère fixe vis-à-vis du capteur $C_1$.
En référence aux figures 2 et 3, nous allons maintenant décrire deux modes de réalisation du procédé d'alignement selon l'invention dans le cas où deux rotations élémentaires d'axes différents et non orthogonaux sont effectuées. Evidemment, ceci n'est pas limitatif et l'homme du métier saura adapter ces étapes pour trois ou plus de trois rotations élémentaires.
Les procédés des figures 2 et 3 sont décrits en référence au système de la figure 1 mais ce n'est pas limitatif et il peut s'appliquer en référence au système de la figure 4 ou tout autre système comprenant plusieurs capteurs inertiels et/ou magnétiques.
Le premier mode de réalisation et le deuxième mode de réalisation diffèrent uniquement par l'étape **D.** Nous allons décrire d'abord les étapes **A** à **C** qui sont communes aux deux modes de réalisation.
En outre, pour chacun des deux modes de réalisation, une étape préalable de calibration (ne faisant pas partie de l'invention) a déjà été réalisée de sorte que chaque mesure physique acquise pour un capteur est exprimée dans le repère orthogonal défini pour ledit capteur.
La première étape **A** consiste en l'application de deux rotations élémentaires au support, autour de deux axes de rotation $m_1$ et $m_2$ de directions distinctes.
Le deuxième axe de rotation $m_2$ n'est pas perpendiculaire au premier axe de rotation $m_1$.
La première étape **A** peut être décomposée en autant de sous-étapes que de rotations. Les figures 2 et 3 illustrent une première sous-étape **A1** dans laquelle le support du capteur est tourné autour d'un premier axe de rotation arbitraire $m_1$ et une deuxième sous-étape **A2** dans laquelle le support du capteur est tourné autour d'un deuxième axe de rotation arbitraire $m_2$ non perpendiculaire à $m_1$.
La seconde étape **B** consiste en l'acquisition d'une série $V_i$ de N mesures physiques pour chaque capteur Ci et pour chaque rotation élémentaire, chaque mesure physique $v_i(n)$ étant acquise pour une n-ième position angulaire autour de chaque axe de rotation $m_1$ et $m_2$ et étant exprimée dans le repère orthogonal Sci du i-ième capteur $C_i$. n est

un entier variant entre 1 et N, et i est un entier compris entre 1 et 4 (pour les quatre capteurs représentés). N est un entier supérieur ou égal à 3 et est identique pour tous les capteurs.

Cette seconde étape **B** peut également être décomposée en autant de sous-étapes que de rotations, puisque les mesures sont acquises pendant chaque rotation. Les étapes **A** et **B** sont donc imbriquées. Les figures 2 et 3 illustrent une première sous-étape **B1** dans laquelle chaque capteur Ci fournit N mesures physiques pendant la première rotation $m_1$ et une deuxième sous-étape **B2** dans laquelle chaque capteur $C_i$ fournit N mesures physiques pendant la deuxième rotation $m_2$.

La troisième étape **C** consiste en l'estimation des coordonnées des vecteurs $\mathbf{m}_{1i}$ et $\mathbf{m}_{2i}$ correspondant respectivement aux premier et deuxième axes de rotation $m_1$ et $m_2$, lesdites coordonnées étant exprimées dans le repère $S_{Ci}$ de chaque capteur $C_i$.

Cette estimation est déduite des N mesures physiques $\mathbf{v}_i(n)$ acquises pour chaque capteur $C_i$ et chaque rotation élémentaire, ledit axe de rotation correspondant à l'axe pour lequel l'écart type (ou la variance) des valeurs desdites N mesures physiques projetées sur ledit axe présente un optimum. Cela correspond à un minimum pour un magnétomètre ou un accéléromètre et à un maximum pour un gyromètre. On peut utiliser l'analyse en composants principales (ACP) pour réaliser cette étape **C**.

Cette étape peut également être décomposée en autant de sous-étapes que de rotations puisqu'elle consiste en l'estimation des coordonnées de chaque axe de rotation $m_1$ et $m_2$. Les figures 2 et 3 illustrent une première sous-étape **C1** dans laquelle les coordonnées du premier axe de rotation $m_1$ dans le repère $S_{Ci}$ de chaque capteur $C_i$ sont déterminées et une deuxième sous-étape **C2** dans laquelle les coordonnées du deuxième axe de rotation $m_2$ dans le repère $S_{Ci}$ de chaque capteur $C_i$ sont déterminées. On peut utiliser l'analyse en composants principales (ACP) pour réaliser chacune de ces sous-étapes **C1, C2**.

On va maintenant décrire un exemple de sous-étape **C1** lorsqu'un capteur est un magnétomètre $M_1$.

On utilise l'analyse en composantes principales (ACP) pour déterminer les coordonnées de l'axe de rotation $m_1$ dans le repère $S_{M1}$ du magnétomètre $M_1$. Pour cela, des mesures du capteur sont acquises à différentes positions angulaires autour de l'axe de rotation $m_1$.

Le magnétomètre ayant trois axes de sensibilité, chaque mesure est considérée comme un point dans l'espace des mesures à trois dimensions. Pour la n-ième position angulaire, les composantes du vecteur champ magnétique dans le repère $S_{M1}$ sont notées $\mathbf{v}_{\mathrm{M1}}(n) \in \mathbb{R}^3$, n étant un entier variant entre 1 et N.

L'ensemble des mesures peut être organisé dans une matrice N×3 :

$$V_{M1} = [\boldsymbol{v}_{M1}(1), \dots, \boldsymbol{v}_{M1}(N)]^T$$

Nous supposons, sans réduire le caractère général de l'invention, que les mesures ont été traitées pour fournir des données centrées à moyenne nulle, soit :

$$V_{M1}{}^T \mathbf{1}_N = \mathbf{0}_3$$

Sur la matrice obtenue $V_{M1}$, il est possible de réaliser une analyse en composantes principales pour déterminer l'axe de plus faible variation correspondant à l'axe de rotation $m_1$ dans le repère du capteur $\mathbf{M_1}$. La détermination de l'axe de plus faible variation par une analyse en composante principale est connue et n'a pas besoin d'être décrite en détail ici. On pourra se reporter notamment à la description de cette technique faite dans le recueil « Principal comportent analysis, 2nde édition, Jolliffe I.T., Springer 2002 ».

En utilisant l'ACP, nous pouvons exprimer le vecteur de champ magnétique $\mathbf{V}_P$ dans un nouveau repère $S_P$ en utilisant la transformation :

$$V_P = V_{M1} U$$

De manière connue, la matrice :

$$U = [\boldsymbol{u_1}, \boldsymbol{u_2}, \boldsymbol{u_3}]$$

où $\mathbf{u}_1$, $\mathbf{u}_2$, $\mathbf{u}_3$ sont les vecteurs propres, est trouvée par décomposition en valeurs propres appliquée à la matrice $\mathbf{C}_V$ de covariance $3 \times 3$ :

$$C_V = \frac{1}{N-1} V_{M1}^T V_{M1} = UDU^T$$

où **D** est une matrice diagonale qui porte la variance des composantes.

Si les vecteurs propres ont été triés en fonction de leurs valeurs propres associées (par ordre décroissant), la variance de la composante principale $V_{M1}$ $u_3$ doit être proche de zéro. Le vecteur $u_3$ correspond aux composantes de l'axe de rotation $m_1$ exprimées dans le repère capteur $S_{M1}$, c'est-à-dire $m_{1M1} = u_3$.

Il est ainsi possible d'estimer l'axe de rotation $m_1$ à partir de la troisième colonne de la matrice **U,** l'axe de rotation $m_1$ étant ainsi exprimé dans le repère du magnétomètre.

Les mêmes opérations peuvent être réalisées dans la sous-étape **C2** pour déterminer les coordonnées $m_{2M1}$ de l'axe de rotation $m_2$ dans le repère $S_{M1}$ du magnétomètre **M₁.**

Lorsqu'un capteur est un accéléromètre, les sous-étapes **C1** et **C2** décrites ci-dessus sont également applicables. Le vecteur propre associé à la plus petite valeur propre exprime à nouveau l'axe de rotation dans le repère de l'accéléromètre.

Lorsqu'un capteur est un gyromètre, les sous-étapes **C1** et **C2** décrites ci-dessus doivent être légèrement modifiées pour déterminer la projection avec la plus grande variance, c'est-à-dire $u_1$ au lieu de la plus petite variance $u_3$.

D'autres méthodes permettant d'estimer l'axe de rotation correspondant à l'axe pour lequel l'écart type des valeurs des mesures physiques projetées sur ledit axe présente un optimum peuvent également être mises en œuvre. A titre d'exemple, la méthode des moindres carrés peut également être utilisée.

Ainsi, les étapes **A**, **B** et **C** permettent de déterminer, pour chaque rotation élémentaire, les coordonnées du vecteur $m_{1i}$ ou $m_{2i}$ correspondant au même premier ou au même deuxième axe de rotation exprimé dans les repères orthogonaux $S_{Ci}$ des différents capteurs $C_i$.

Le procédé comprend ensuite une étape **D** de détermination de la rotation entre le repère d'un i-ième capteur $C_i$ et le repère d'un j-ième capteur $C_j$, lesdits capteurs étant disposés sur le même support, chaque rotation étant obtenue à partir des coordonnées des vecteurs $m_{ki}$, $m_{kj}$ correspondant aux axes de rotation $m_k$ dans chacun des repères $S_{Ci}$, $S_{Cj}$ des i-ième et j-ième capteurs $C_i$, $C_j$, l'étape **D** de détermination mettant en œuvre une technique d'estimation d'attitude à partir des vecteurs déterminés, notamment la minimisation d'une fonction de coût telles que les méthodes décrites plus après.

Nous allons maintenant décrire un premier mode de réalisation de cette étape **D** correspondant au premier mode de réalisation illustré dans la figure 2.

Dans ce premier mode de réalisation, la rotation entre le repère d'un i-ième capteur $C_i$ et le repère d'un j-ième capteur $C_j$ consiste en une étape **D1** de détermination d'au moins une matrice de rotation **Rij** permettant d'exprimer les mesures du j-ième capteur $C_j$ dans le repère du i-ième capteur $C_i$.

L'étape **D1** de détermination de la matrice de rotation **R**$_{ij}$ comprend une étape **D10** de minimisation de la fonction de coût, dit problème de Wahba :

$$\phi(R_{ij}) = \frac{1}{2} \sum_{k=1}^{K} \alpha_k \| m_{ki} - R_{ij} m_{kj} \|^2$$

où K est le nombre de rotations élémentaires : il est égal à 2 dans le mode de réalisation représenté (mais K peut être supérieur à 2), en outre :

- $m_{ki}$ est le vecteur de l'axe de rotation $m_k$ dans le repère $S_{Ci}$ du capteur $C_i$ ;
- $m_{kj}$ est le vecteur de l'axe de rotation $m_k$ dans le repère $S_{Cj}$ du capteur $C_j$ ;
- $\alpha_k$ sont des constantes de pondération définies pour chaque rotation élémentaire, chacune étant supérieure à 0 et inférieure à 1.

La fonction de coût est la somme pondérée des erreurs quadratiques commises pour chaque vecteur de rotation.

Les constantes de pondération permettent de tenir compte des différents niveaux de bruit à travers les observations des vecteurs de rotation. La somme des coefficients de pondération est égale à 1.

On peut définir chaque constante $\alpha_k$ de pondération par la relation :

$$\alpha_k = {}^1\!/_{\sigma_k}$$

où la $\sigma_k$ est l'écart type (ou la déviation standard) associé à l'axe de rotation $m_k$.

Alternativement, si on ne pondère pas, alors chaque constante $\alpha_1$ et $\alpha_2$ est égale à 0,5, ou plus largement chaque constante $\alpha_k$ est égale à 1/K pour K rotations élémentaires.

On note par la suite :

$$\lambda_0 = \sum_{k=1}^{K} \alpha_k$$

Pour le cas de vecteurs $m_{ki}$, $m_{kj}$ unitaires, on peut exprimer la fonction de coût ainsi :

$$\phi(R_{ij}) = \lambda_0 - \sum_{k=1}^{K} \alpha_k \, m_{ki}^T R_{ij} m_{kj}$$

Le second terme étant un scalaire, on peut écrire

$$\phi(R_{ij}) = \lambda_0 - \sum_{k=1}^{K} \alpha_k \, tr(m_{ki}^T R_{ij} m_{kj}) = \lambda_0 - \sum_{k=1}^{K} \alpha_k \, tr(R_{ij} m_{kj} m_{ki}^T) =$$
$$\lambda_0 - tr(R_{ij} \sum_{k=1}^{K} \alpha_k m_{kj} m_{ki}^T)$$

Ou encore :

$$\phi(R_{ij}) = \lambda_0 - tr(R_{ij} C^T)$$

où tr désigne la trace d'une matrice, soit la somme de ses coefficients diagonaux et où la matrice **C** est définie par la formule :

$$C = \sum_{k=1}^{K} \alpha_k \, m_{ki} m_{kj}^T$$

La matrice de rotation optimale peut être aisément trouvée en considérant la décomposition en valeurs singulières (SVD) de la matrice **C** soit :

$$C = U_C S V_C^T$$

où **S** est une matrice diagonale dont les composantes sont $s_1$, $s_2$, $s_3$, avec

$$s_1 \geq s_2 \geq s_3 \geq 0$$

La matrice de rotation optimale $\widehat{R_{ij}}$ est alors donnée par :

$$\widehat{R_{ij}} = U_C \cdot \begin{pmatrix} 1 & 0 & 0 \\ 0 & 1 & 0 \\ 0 & 0 & \chi \end{pmatrix} \cdot V_C^T$$

où $\chi$ est donnée par la relation :

$$\chi = det(\boldsymbol{U}_C)\,det\boldsymbol{V}_C = \pm 1$$

où det désigne le déterminant d'une matrice.

La minimisation de la fonction de coût de Wahba revient à trouver la matrice de rotation optimale $\widehat{\boldsymbol{R}_{IJ}}$ pour laquelle :

$$\phi(\widehat{\boldsymbol{R}_{IJ}}) = \lambda_0 - (s_1 + s_2 + s_3\chi)$$

Nous allons maintenant décrire un deuxième mode de réalisation de l'étape **D** correspondant au deuxième mode de réalisation, illustré dans la figure 3.

Dans ce deuxième mode de réalisation, la rotation entre le repère d'un i-ième capteur $C_i$ et le repère d'un j-ième capteur $C_j$ comprend une étape **D2** de détermination d'un quaternion unitaire **q** exprimant la rotation entre les i-ième et j-ième capteurs, et construit à partir des coordonnées des vecteurs $\mathbf{m}_{ki}$, $\mathbf{m}_{kj}$.

Les quaternions sont une généralisation des nombres complexes et ils forment une algèbre associative sur le corps des réels. Un quaternion est interprété comme un vecteur 4-D avec une partie scalaire (ou réelle) $q_s$ et une partie vectorielle (ou imaginaire) $\mathbf{q}_v$. On note cette équivalence :

$$\mathfrak{q} \leftrightarrow q = \begin{pmatrix} q_v \\ q_s \end{pmatrix}$$

Une rotation entre un capteur i et un capteur j se traduit par le produit :

$$\mathfrak{i} = \mathfrak{q} \otimes \mathfrak{j} \otimes \bar{\mathfrak{q}} \rightarrow i = \boldsymbol{L}(\bar{q})\boldsymbol{R}(q)j$$

avec **q** un quaternion unitaire, **L** la matrice de rotation à gauche et **R** la matrice de rotation à droite.

Dans le cas de vecteurs, on déduit la relation :

$$\boldsymbol{L}(\bar{q})\boldsymbol{R}(q) = \begin{pmatrix} \boldsymbol{R}_{ij} & \boldsymbol{0}_3 \\ \boldsymbol{0}_3^T & 1 \end{pmatrix}$$

On note qu'il est possible de passer d'un quaternion à la matrice de rotation $\mathbf{R}_{ij}$.

L'étape **D2** de détermination comprend au moins une étape **D20** de minimisation de la fonction de coût :

$$\phi(\boldsymbol{q}) = \frac{1}{2}\sum_{k=1}^{K}\alpha_k \left\| (\boldsymbol{m}_{ki})_q - \bar{\mathfrak{q}} \otimes (\boldsymbol{m}_{kj})_q \otimes \mathfrak{q} \right\|^2$$

$$= \frac{1}{2}\sum_{k=1}^{K}\alpha_k \left\| \mathfrak{q} \otimes (\boldsymbol{m}_{ki})_q - (\boldsymbol{m}_{kj})_q \otimes \mathfrak{q} \right\|^2$$

où K est le nombre de rotations élémentaires : il est égal à 2 dans le mode de réalisation représenté (mais K peut être supérieur à 2), en outre :

- $(\mathbf{m}_{ki})_q$ est le quaternion créé à partir du vecteur de l'axe de rotation $m_k$ dans le repère $S_{Ci}$ du capteur $C_i$ ;
- $(\mathbf{m}_{kj})_q$ est le quaternion créé à partir du vecteur de l'axe de rotation $m_k$ dans le repère $S_{Cj}$ du capteur $C_j$ ;
- $\alpha_k$ sont des constantes de pondération définies pour chaque rotation élémentaire, chacune est supérieure à 0 et inférieure à 1.

Comme pour le premier mode de réalisation, la somme des coefficients de pondération est égale à 1.

On peut définir chaque constante de pondération $\alpha_k$ par la relation :

$$\alpha_k = \frac{1}{\sigma_k}$$

où la $\sigma_k$ est l'écart-type (ou la déviation standard) du bruit associé à l'axe de rotation $m_k$.

Alternativement, si on ne pondère pas, alors chaque constante $\alpha_1$ et $\alpha_2$ est égale à 0,5, ou plus largement chaque constante $\alpha_k$ est égale à 1/K pour K rotations élémentaires.

On note par la suite :

$$\lambda_0 = \sum_{k=1}^{K} \alpha_k$$

On peut exprimer la fonction de coût ainsi :

$$\phi(\boldsymbol{q}) = \lambda_0 - \sum_{k=1}^{K} \alpha_k \, \boldsymbol{q}^T \boldsymbol{Q}_k \boldsymbol{q}$$

Où $\boldsymbol{Q}_k$ est la matrice orthogonale donnée par :

$$\boldsymbol{Q}_k = \boldsymbol{R}^T(m_{ki}) \boldsymbol{L}(m_{kj})$$

On utilise la propriété que la norme d'un quaternion reste inchangée si on le multiplie par un quaternion unitaire et que dans le cas d'un vecteur **u** unitaire, les matrices **R(u)** et **L(u)** sont orthogonales et commutent. On peut utiliser une décomposition en valeurs propres de la matrice **Q** 4x4 où :

$$\boldsymbol{Q} = \sum_{k=1}^{K} \alpha_k \boldsymbol{Q}_k$$

La décomposition en valeurs propres peut être soit complète ou soit partielle dans le cas de l'algorithme QUEST.

On peut noter que les éléments de la matrice **Q** se déduisent facilement de ceux de la matrice **C,** introduite dans le premier mode de réalisation.

Le procédé d'alignement peut comprendre une étape **E** (non représentée dans les figures 2 et 3) d'alignement des mesures d'un capteur ($C_j$) dans un repère de référence ($S_{Cr}$) correspondant au repère d'un capteur ($C_r$) choisi parmi les capteurs disposés sur le support, ladite étape d'alignement étant réalisée à partir de la rotation déterminée lors de l'étape **D.**

Exemple de réalisation

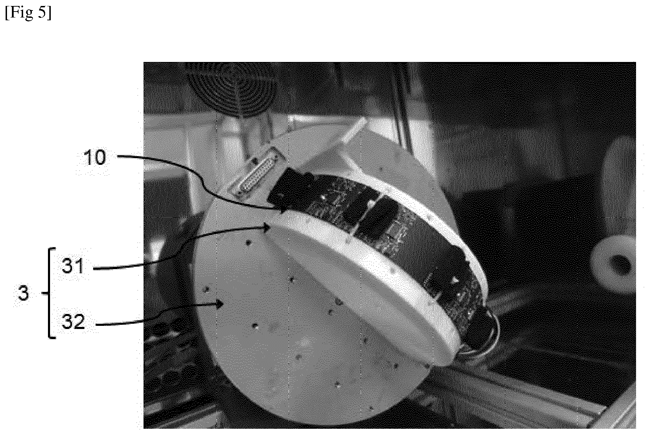

Les figures 4 et 5 illustrent un exemple particulier de réalisation d'un procédé et d'un dispositif d'alignement.

Dans cet exemple, le système de mesure 1 représenté en figure 4 comprend un support sous forme de bande rigide et incurvée sur laquelle sont disposés des accéléromètres et des gyromètres.

Le système de mesure représenté comprend six nœuds de mesure, chaque nœud de mesure comprenant un accéléromètre à trois axes et un gyromètre à trois axes. Les accéléromètres sont repérés par les références $A_i$ et leurs axes par $S_{Ai}$, i étant un entier compris entre 1 et 6. Les gyromètres sont repérés par les références $G_i$ et leurs axes par $S_{Gi}$. Tous les capteurs sont synchronisés dans le temps à l'aide d'une électronique dédiée (non représentée) avec une fréquence d'échantillonnage égale à 45 Hz. On peut observer que les capteurs des nœuds 2 et 5 sont tournés de $\pi$ autour de l'axe z (repère du support) par rapport aux autres.

La figure 5 représente un exemple de dispositif d'alignement permettant de mettre en œuvre un procédé d'alignement selon l'invention. Il est à noter que le même dispositif permet de procéder à la calibration (préalablement à l'alignement).

Le dispositif d'alignement 3 comprend une table de rotation mono-axe 31, ladite table étant placée dans le sens vertical. La table de rotation peut être contrôlée à la fois en position angulaire et en vitesse angulaire. La bande support 10 des capteurs est disposée sur un socle 32 en forme de lune pendant la rotation, le socle 32 étant attaché à la table de rotation 31.

Une unité de traitement (non représentée) permet d'implémenter les étapes **B, C, D,** et éventuellement **E** du procédé d'alignement.

Un tel dispositif n'est en rien limitatif et tout autre dispositif permettant de recevoir le support du système de mesure et de le faire tourner peut être aisément conçu par l'homme du métier. En outre, le dispositif d'alignement, et notamment le socle, est nécessairement adapté à la forme du support.

Préalablement à l'alignement, chaque capteur est calibré par une procédure propre. On peut citer les exemples suivants de calibration.

Pour la calibration de l'accéléromètre, une rotation de $2\pi$ est effectuée et des mesures de l'accéléromètre sont acquises tous les 5°. Cette étape de rotation est répétée pour trois axes de rotation distincts, en contrôlant la position angulaire de la table de rotation. On peut appliquer la procédure décrite dans la publication « Scalar calibration of vector magnetometers » Meas. Sci. Technol. 11 120, JMG Merayo et al. (2000) pour estimer les paramètres de calibration de l'accéléromètre. Les mesures des accéléromètres décrivent un ellipsoïde en trois dimensions et la calibration revient à déterminer les paramètres de l'ellipsoïde.

Pour l'étalonnage du gyromètre, une rotation est appliquée entre - 200°/s et + 200°/s avec un pas de 10°/s, pendant laquelle des mesures du gyromètre sont acquises. Comme pour la calibration de l'accéléromètre, cette étape de rotation est répétée pour trois axes de rotation distincts. On peut ensuite utiliser une régression pour déterminer les paramètres de calibration du gyromètre.

Si les calibrations des capteurs sont réalisées comme décrit ci-dessus, on voit qu'on peut utiliser au moins certaines des mesures acquises au cours de la calibration de ces capteurs, lesdites mesures étant alors calibrées sous forme de mesures physiques et exprimées dans un repère orthogonal du capteur. Ainsi, dans l'exemple représenté, on peut exploiter les mesures physiques acquises au cours de la calibration de l'accéléromètre (qui met en œuvre une rotation in-crémentale, comme celle décrite ci-dessus où la table de rotation occupe des positions angulaires tous les 5 degrés) et/ou les mesures physiques acquises au cours de la calibration du gyromètre (qui met en œuvre une rotation à vitesse rapide comme celle décrite ci-dessus où la table de rotation tourne à différentes vitesses angulaires entre -200 °/s et +200°/s par pas de 10°).

Par une analyse en composantes principales sur chaque matrice $V_i$ constituée par les mesures de chaque capteur $A_i$ ou $G_i$, on estime les coordonnées du vecteur $m_{ki}$ correspondant à un axe de rotation $m_k$ dans le repère $S_{Ai}$ ou $S_{Gi}$ du capteur. Cette analyse est reproduite pour chaque capteur et pour chaque axe de rotation. Dans l'exemple de réalisation, trois rotations élémentaires distinctes ont été réalisées, selon des axes de rotation dont au moins deux ne sont pas orthogonaux entre eux.

Ensuite, les matrices de rotation entre les capteurs sont déterminées.

On peut déterminer la matrice de rotation entre les deux accéléromètres, par exemple entre les accéléromètres $A_1$ et $A_2$, par minimisation de la fonction de coût :

$$\phi\left(\boldsymbol{R}_{A_1 A_2}\right) = \frac{1}{2}\sum_{k=1}^{K} \alpha_k \left\|\boldsymbol{m}_{kA_1} - \boldsymbol{R}_{A_1 A_2}\boldsymbol{m}_{kA_2}\right\|^2$$

en utilisant la décomposition en valeurs singulières de la matrice :

$$\boldsymbol{C} = \sum_{k=1}^{K} \alpha_k \boldsymbol{m}_{kA_1} \hat{\boldsymbol{m}}_{kA_2}^{T}$$

On peut déterminer la matrice de rotation entre les deux gyromètres, par exemple entre les gyromètres $G_1$ et $G_2$, par minimisation de la fonction de coût :

$$\phi\left(\boldsymbol{R}_{G_1 G_2}\right) = \frac{1}{2}\sum_{k=1}^{K} \alpha_k \left\|\boldsymbol{m}_{kG_1} - \boldsymbol{R}_{G_1 G_2}\boldsymbol{m}_{kG_2}\right\|^2$$

en utilisant la décomposition en valeurs singulières de la matrice :

$$\boldsymbol{C} = \sum_{k=1}^{K} \alpha_k \boldsymbol{m}_{kG_1} \boldsymbol{m}_{kG_2}^{T}$$

On peut déterminer la matrice de rotation entre un accéléromètre et un gyromètre, par exemple entre l'accéléromètre A1 et le gyromètre $G_1$, par minimisation de la fonction de coût :

$$\phi\left(R_{A_1G_1}\right) = \frac{1}{2}\sum_{k=1}^{K}\alpha_k \left\| m_{kA_1} - R_{A_1G_1}m_{kG_1}\right\|^2$$

en utilisant la décomposition en valeurs singulières de la matrice :

$$C = \sum_{k=1}^{K}\alpha_k m_{kA_1}m_{kG_1}^{T}$$

Les inventeurs ont réalisé plusieurs rotations (au moins trois) à vitesse lente, et plusieurs rotations (au moins trois) selon les trois mêmes axes à vitesse rapide, et ont construit les matrices des coordonnées des trois axes dans les repères des capteurs : une première matrice de coordonnées à vitesse lente et une seconde matrice de coordonnées à vitesse rapide pour un même capteur. Les inventeurs ont pu constater que les deux matrices fournissent sensiblement les mêmes informations. Ceci est important en ce qui concerne au moins les accéléromètres, pour montrer que l'alignement peut être réalisé en dynamique et pas seulement en statique, dans la mesure où les informations ne sont pas perturbées par l'accélération centrifuge.

Les inventeurs ont ensuite construit les matrices de rotation entre l'accéléromètre $A_1$ dont le repère est choisi comme repère commun de référence et les autres capteurs. De même, les inventeurs ont construit une première matrice de rotation à vitesse lente et une seconde matrice de rotation à vitesse rapide pour un même capteur et ont pu constater que les deux matrices fournissent sensiblement les mêmes informations. En outre, ils ont pu vérifier que les calculs confirmaient l'alignement entre l'accéléromètre $A_1$ et le gyromètre $G_1$ (même nœud).

Dans cet exemple de réalisation, on constate ainsi que le procédé d'alignement de l'invention est capable d'estimer la matrice de rotation d'alignement, entre toute paire d'accéléromètre, toute paire de gyromètre, ou toute paire accéléromètre / gyromètre, et que le procédé peut être réalisé à vitesse de rotation lente ou à vitesse de rotation rapide sans que cela ne perturbe les résultats.

Plus généralement, l'invention est applicable pour tout système de mesure comprenant des magnétomètres, des accéléromètres, des gyromètres, à toute combinaison de ces capteurs et encore plus généralement à toute combinaison de capteurs inertiels et/ou magnétiques.

L'invention peut s'appliquer en particulier pour les centrales inertielles/magnétiques avec 3 accéléromètres, 3 magnétomètres et 3 gyromètres (3a3m3g) pour lesquelles on peut avantageusement utiliser le même dispositif et/ou les mêmes mesures physiques pour la calibration et pour l'alignement des capteurs.

Les différents modes présentés peuvent être combinés entre eux.

En outre, la présente invention n'est pas limitée aux modes de réalisation précédemment décrits mais s'étend à tout mode de réalisation entrant dans la portée des revendications.

Les domaines d'application de l'invention sont variés et couvrent en particulier : le domaine biomédical, pour l'observation des personnes ; le domaine sportif, pour l'analyse d'un mouvement, d'un sportif lui-même ou de son équipement (raquettes, balles ...) ; le domaine de l'automobile ou de l'aéronautique (drones, avions...), les domaines de la robotique, de la réalité virtuelle, des jeux vidéo, des tablettes, des Smartphones ...

**Revendications**

1.  Procédé d'alignement d'une pluralité de capteurs ($C_i$, $C_j$) inertiels et/ou magnétiques, lesdits capteurs étant disposés sur un même support (10), de préférence rigide, le procédé comprenant les étapes suivantes :

    - **A** une étape (**A1**, **A2**) d'application de K rotations élémentaires au support, autour d'au moins deux axes de rotation $m_k$ de directions distinctes non nécessairement orthogonales entre elles, K étant un nombre entier supérieur ou égal à 2 ;
    - **B** une étape (**B1**, **B2**) d'acquisition d'une série $V_i$ de N mesures physiques obtenues pour chaque i-ième capteur ($C_i$) et pour chaque k-ième rotation élémentaire, chaque mesure physique $v_i(n)$ étant acquise pour une n-ième position angulaire autour du k-ième axe de rotation $m_k$, n variant entre 1 et N, et étant exprimée dans un repère orthogonal ($S_{Ci}$) du i-ième capteur (Ci) ;
    - **C** une étape (**C1**, **C2**) d'estimation des coordonnées du vecteur $m_{ki}$ de chaque axe de rotation $m_k$ dans le repère ($S_{Ci}$) de chaque i-ième capteur ($C_i$), ladite estimation étant déduite des N mesures physiques $v_i(n)$ acquises pour chaque i-ième capteur et chaque k-ième rotation élémentaire, ledit axe de rotation correspondant à l'axe pour lequel l'écart type ou la variance des valeurs desdites mesures physiques projetées sur ledit axe présente un optimum, par exemple un minimum pour un magnétomètre ou un accéléromètre, ou un maximum pour un gyromètre ;

les étapes **A, B** et **C** permettant de déterminer, pour chaque k-ième rotation élémentaire, les coordonnées du vecteur $m_{ki}$ du même k-ième axe de rotation $m_k$ dans les repères ($S_{Ci}$) des différents capteurs ($C_i$) ;
ledit procédé comprenant en outre :

- **D** une étape de détermination de la rotation entre le repère d'un i-ième capteur ($C_i$) et le repère d'un j-ième capteur ($C_j$), lesdits capteurs étant disposés sur le même support, chaque rotation étant obtenue à partir des coordonnées des vecteurs $m_{ki}$, $m_{kj}$ correspondant aux axes de rotation $m_k$ dans chacun des repères ($S_{Ci}$, $S_{Cj}$) des i-ième et j-ième capteurs ($C_i$, $C_j$), et ladite étape de détermination comprenant au moins une étape (**D10**, **D20**) de minimisation de la fonction de coût, ladite fonction de coût étant construite à partir des vecteurs $m_{ki}$, $m_{kj}$ déterminés.

2. Procédé selon la revendication 1, l'étape **D** de détermination de la rotation comprenant une étape préalable de pondération de chaque k-ième rotation élémentaire par une constante de pondération $\alpha_k$, exprimant la contribution de l'erreur quadratique de la k-ième rotation à la fonction de coût, où $\alpha_k$ est strictement supérieure à 0 et inférieure à 1 et la somme des constantes de pondération $\alpha_k$ est égale à 1.

3. Procédé selon l'une des revendications 1 à 2, l'étape **D** de détermination de la rotation comprenant une étape (**D1**) de détermination d'au moins une matrice de rotation $R_{ij}$ permettant d'exprimer les mesures d'un j-ième capteur ($C_j$) dans le repère d'un i-ième capteur ($C_i$) à partir des coordonnées des vecteurs $m_{ki}$, $m_{kj}$ des axes de rotation $m_k$ dans chacun des repères ($S_{Ci}$, $S_{Cj}$) des i-ième et j-ième capteurs ($C_i$, $C_j$).

4. Procédé selon la revendication 3 en combinaison avec la revendication 3, l'étape (**D1**) de détermination de la matrice de rotation $R_{ij}$ comprenant au moins une étape (**D10**) de minimisation de la fonction de coût, ladite fonction de coût s'exprimant sous la forme :

$$\phi\big(\boldsymbol{R}_{ij}\big) = \frac{1}{2}\sum_{k=1}^{K}\alpha_k\big\|\boldsymbol{m}_{ki} - \boldsymbol{R}_{ij}\boldsymbol{m}_{kj}\big\|^2$$

où K est le nombre de rotations élémentaires, $m_{ki}$ est le vecteur du k-ième axe de rotation $m_k$ dans le repère ($S_{Ci}$) du i-ième capteur ($C_i$), $m_{kj}$ est le vecteur du k-ième axe de rotation $m_k$ dans le repère ($S_{Cj}$) du j-ième capteur ($C_j$) et $\alpha_k$ est une constante de pondération définie pour chaque k-ième rotation élémentaire, où $\alpha_k$ est strictement supérieure à 0 et inférieure à 1 et la somme des constantes de pondération $\alpha_k$ est égale à 1.

5. Procédé selon la revendication 4, l'étape (**D10**) de minimisation de la fonction de coût $\phi(\boldsymbol{R}_{ij})$ mettant en œuvre la décomposition en valeurs singulières de la matrice :

$$\boldsymbol{C} = \sum_{k=1}^{K}\alpha_k\boldsymbol{m}_{ki}\boldsymbol{m}_{kj}^T$$

6. Procédé selon l'une des revendications 1 à 2, l'étape **D** de détermination de la rotation comprenant une étape (**D2**) de détermination d'au moins un quaternion unitaire **q** à partir des coordonnées des vecteurs $m_{ki}$, $m_{kj}$ des axes de rotation $m_k$ dans chacun des repères ($S_{Ci}$, $S_{Cj}$) des deux capteurs ($C_i$, $C_j$).

7. Procédé selon la revendication 6 en combinaison avec la revendication 3, l'étape (**D2**) de détermination du quaternion unitaire **q** comprenant au moins une étape (**D20**) de minimisation de la fonction de coût, ladite fonction de coût s'exprimant sous la forme :

$$\phi(\boldsymbol{q}) = \frac{1}{2}\sum_{k=1}^{K}\alpha_k\left\|(\boldsymbol{m}_{ki})_q - \bar{q}\otimes(\boldsymbol{m}_{kj})_q\otimes q\right\|^2$$

$$= \frac{1}{2}\sum_{k=1}^{K}\alpha_k\left\|q\otimes(\boldsymbol{m}_{ki})_q - (\boldsymbol{m}_{kj})_q\otimes q\right\|^2$$

où K est le nombre de rotations élémentaires, $(m_{ki})_q$ est le quaternion créé à partir du vecteur du k-ième axe de

rotation $m_k$ dans le repère ($S_{Ci}$) du i-ième capteur ($C_i$), $(\mathbf{m}_{kj})_q$ est quaternion créé à partir du vecteur du k-ième axe de rotation $m_k$ dans le repère ($S_{Cj}$) du j-ième capteur ($C_j$) et $\alpha_k$ est une constante de pondération définie pour chaque k-ième rotation élémentaire, où $\alpha_k$ est strictement supérieure à 0 et inférieure à 1 et la somme des constantes de pondération $\alpha_k$ est égale à 1.

8. Procédé selon l'une quelconque des revendications 1 à 7, au moins deux rotations élémentaires étant appliquées selon au moins deux axes de rotation $m_k$ de directions non orthogonales entre elles.

9. Procédé selon l'une quelconque des revendications 1 à 8, comprenant en outre :

   - **E** une étape d'alignement des mesures d'un capteur ($C_j$) dans un repère de référence ($S_{Cr}$) correspondant au repère d'un capteur ($C_r$) choisi parmi les capteurs disposés sur le support, ladite étape d'alignement étant réalisée à partir de la rotation déterminée à l'étape **D.**

10. Procédé selon l'une quelconque des revendications 1 à 9, l'étape d'estimation **C** comprenant une étape de calcul par analyse en composantes principales (ACP) des N mesures physiques acquises, l'une parmi la première ou la troisième composante principale correspondant aux coordonnées dudit axe de rotation, par exemple la troisième composante principale pour un magnétomètre ou un accéléromètre ou la première composante principale pour un gyromètre.

11. Procédé selon l'une quelconque des revendications 1 à 9, l'étape d'estimation **C** comprenant une étape de calcul des moindres carrés appliquée à une combinaison linéaire des mesures physiques acquises.

12. Procédé selon l'une quelconque des revendications 1 à 11, les capteurs étant choisis parmi des accéléromètres, des gyromètres, des magnétomètres ou à une combinaison d'au moins deux de ces capteurs.

13. Dispositif d'alignement d'une pluralité de capteurs inertiels et/ou magnétiques, lesdits capteurs étant disposés sur un même support (10) de préférence rigide, ledit dispositif comprenant :

   - un moyen de rotation (3) adapté pour appliquer des rotations élémentaires au support, selon des axes de rotation de directions distinctes et non nécessairement orthogonales entre elles ;
   - une unité de traitement apte à implémenter les étapes **B, C, D,** et éventuellement **E,** du procédé d'alignement selon l'une des revendications 1 à 12.

[Fig 1]

[Fig 2]

$$\phi(\boldsymbol{R}_{ij}) = \frac{1}{2}\sum_{k=1}^{K}\alpha_k\left\|\boldsymbol{m}_{ki} - \boldsymbol{R}_{ij}\boldsymbol{m}_{kj}\right\|^2$$

[Fig 3]

A1 — Rotation du support selon l'axe $m_1$

A2 — Rotation du support selon l'axe $m_2$

B1 — Acquisition de N mesures $V_i$ pour chaque capteur $C_i$ pendant la rotation $m_1$

B2 — Acquisition de N mesures $V_i$ pour chaque capteur $C_i$ pendant la rotation $m_2$

C1 — Détermination coordonnées vecteur $m_{1i}$ dans repère $S_{Ci}$ de chaque capteur $C_i$

C2 — Détermination coordonnées vecteur $m_{2i}$ dans repère $S_{Ci}$ de chaque capteur $C_i$

D2 — Détermination du quaternion unitaire pour exprimer la rotation entre deux capteurs $C_i$ et $C_j$ à partir des coordonnées des vecteurs $m_{1i}$, $m_{1j}$, $m_{2i}$, $m_{2j}$

D20 — Minimisation de la fonction de coût

$$\phi(q) = \frac{1}{2}\sum_{k=1}^{K} \alpha_k \left\| (m_{ki})_q - \bar{q}\otimes(m_{kj})_q\otimes q \right\|^2 = \frac{1}{2}\sum_{k=1}^{K} \alpha_k \left\| q\otimes(m_{ki})_q - (m_{kj})_q\otimes q \right\|^2$$

[Fig 4]

[Fig 5]

Europäisches
Patentamt

European
Patent Office

Office européen
des brevets

## RAPPORT DE RECHERCHE EUROPEENNE

Numéro de la demande

**EP 21 20 8492**

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | HONGLIANG ZHANG ET AL: "Improved multi-position calibration for inertial measurement units", MEASUREMENT SCIENCE AND TECHNOLOGY, IOP, BRISTOL, GB, vol. 21, no. 1, 1 janvier 2010 (2010-01-01), page 15107, XP020168484, ISSN: 0957-0233 | 1,3,6,8, 11-13 | INV. G01C25/00 |
| Y | * abrégé * | 2,10 | |
| A | * 1.Introduction * * p. 2, col. g., 2e paragraphe * * 3.1. Separate calibration process * * 4.Calibration of inter-triad misalignment * * 5.2. Real tests * * figure 2 * | 4,5,7 | |
| | ----- | | |
| X | CN 104 459 828 B (NAT UNIV DEFENSE TECHNOLOGY) 31 mai 2017 (2017-05-31) | 1,6,8,9, 11-13 | |
| Y | * abrégé * | 10 | DOMAINES TECHNIQUES RECHERCHES (IPC) |
| A | * alinéas [0001], [0046], [0070], [0085], [0087], [0091] * * revendication 1 * * figures 1-4 * | 4,5,7 | G01C |
| | ----- | | |
| | -/-- | | |

Le présent rapport a été établi pour toutes les revendications

| Lieu de la recherche | Date d'achèvement de la recherche | Examinateur |
|---|---|---|
| La Haye | 29 mars 2022 | Toth, Rémy |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**page 1 de 2**

Europäisches
Patentamt

European
Patent Office

Office européen
des brevets

## RAPPORT DE RECHERCHE EUROPEENNE

Numéro de la demande

EP 21 20 8492

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | METGE J ET AL: "Calibration of an inertial-magnetic measurement unit without external equipment, in the presence of dynamic magnetic disturbances", MEASUREMENT SCIENCE AND TECHNOLOGY, IOP, BRISTOL, GB, vol. 25, no. 12, 29 octobre 2014 (2014-10-29), page 125106, XP020274211, ISSN: 0957-0233, DOI: 10.1088/0957-0233/25/12/125106 [extrait le 2014-10-29] * abrégé * * 4.1.4. Cross-sensor calibration * * 3.1.4. Cross-sensor calibration * ----- | 1-13 | |
| A | CN 110 006 460 B (SHANGHAI ENG CT MICROSATELLITES) 2 octobre 2020 (2020-10-02) * abrégé * * figures 1-6 * * revendications 1-10 * ----- | 1-13 | |
| Y | EP 1 985 233 A1 (COMMISSARIAT ENERGIE ATOMIQUE [FR]) 29 octobre 2008 (2008-10-29) * abrégé * * figures 1-7 * * alinéas [0052] - [0065], [0087] - [0091] * ----- | 2,10 | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 29 mars 2022 | Toth, Rémy |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................
& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 21 20 8492

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-03-2022

| Document brevet cité au rapport de recherche | Date de publication | Membre(s) de la famille de brevet(s) | Date de publication |
|---|---|---|---|
| CN 104459828 B | 31-05-2017 | AUCUN | |
| CN 110006460 B | 02-10-2020 | AUCUN | |
| EP 1985233 A1 | 29-10-2008 | EP 1985233 A1<br>EP 3381367 A1<br>FR 2915568 A1<br>JP 5594940 B2<br>JP 2009002934 A<br>US 2008281555 A1 | 29-10-2008<br>03-10-2018<br>31-10-2008<br>24-09-2014<br>08-01-2009<br>13-11-2008 |

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2915568

**Littérature non-brevet citée dans la description**

- Calibration methods for inertial and magnetic sensors. *Sensors and Actuators A: Physical,* Décembre 2009, vol. 156 (2), 302-311
- **JOLLIFFE I.T.** Principal comportent analysis. Springer, 2002
- **JMG MERAYO et al.** Scalar calibration of vector magnetometers. *Meas. Sci. Technol.,* 2000, vol. 11, 120